# EUROPÄISCHE PATENTSCHRIFT

(11) **EP 1 269 850 B1**
(45) Veröffentlichungstag und Bekanntmachung des Hinweises auf die Patenterteilung: **17.09.2003**
(21) Anmeldenummer: 02008883.7
(22) Anmeldetag: 20.04.2002
(51) Int. Cl.: A22C 5/00, A23B 4/09

(54) **Verfahren zur Aufrötung und Farbstabilisierung von Hackfleisch und kleinen Frischfleichstückchen**
Method for color-stabilizing of minced meat and small pieces of fresh meat
Procédé de stabilisation de viande hachée et petits morceaux de viande fraîche

(30) Priorität: 18.06.2001 DE 10128931
(43) Veröffentlichungstag der Anmeldung: 02.01.2003
(73) Patentinhaber: SAUERSTOFFWERK FRIEDRICH GUTTROFF GMBH, 97877 Wertheim-Reicholzheim (DE)
(72) Erfinder: Tallafus, Ottmar, 74722 Buchen (DE)
(74) Vertreter: Dimmerling, Heinz, Dipl.-Ing.

(56) Entgegenhaltungen:
- US-A- 4 476 686
- US-A- 4 791 705
- US-A- 6 026 648
- DATABASE WPI Section Ch, Week 197516 Derwent Publications Ltd., London, GB; Class D12, AN 1975-26864W XP002209071 & SU 422 400 A (MOSCOW PLEKHANOV ECONOMY), 14. November 1974 (1974-11-14)

## Beschreibung

Die Erfindung betrifft ein Verfahren nach dem Oberbegriff des Anspruchs 1, zur Farbstabilisierung von Hackfleisch und kleinen Frischfleischstückchen, bei welchem Fleischabschnitte geringer Größe in einem Mischer durch Zuführung eines Kältemittels gekühlt werden.

Ein Problem beim Verkauf beziehungsweise Vertrieb von Frischfleischprodukten ist die Verfärbung des Fleisches bis zum Kauf durch die Kunden. Die Verfärbung beginnt im Prinzip sofort nach der Schlachtung eines Tieres. Sie tritt insbesondere an den Stellen auf, an denen das Frischfleisch Kontakt mit beispielsweise einer Verpakkung hat. An diesen Stellen setzt die Verfärbung bereits nach wenigen Stunden ein.

Zwar bedeutet eine Verfärbung des Fleisches nicht, daß das Fleisch verdorben ist, jedoch läßt sich verfärbtes Fleisch nur sehr schlecht verkaufen, da Fleisch vielfach nur nach seinem Aussehen gekauft wird.

Es ist daher wünschenswert, eine Verfärbung des Fleisches zu vermeiden. Hierzu ist es bekannt, mittels eines eingangs genannten Verfahrens Frischfleisch zu behandeln. Hierbei wird dem Frischfleisch im Mischer schneeförmiges Kohlendioxid oder flüssiger Stickstoff zugeführt. Durch die Zugabe von Kohlendioxid und Stickstoff wird zwar ein langsameres Verderben des Frischfleisches erreicht, jedoch ist dieses Verfahren noch nicht optimal, weil die Fleischfarbe durch Zugabe von L CO₂ und LN₂ noch mehr nachdunkelt. Insbesondere findet keinerlei Aufrötung, das heißt, keine Rückführung einer schon bräunlich bis gräulich gewordenen Fleischfarbe in hellrot leuchtende schlachtfrische Fleischfarbe statt.

Es ist des weiteren bekannt, Frischfleisch so zu verpacken, daß beim Verpacken die normale Luftatmosphäre verdrängt und von einem Gasgemisch ersetzt wird. Das Gasgemisch besteht beispielsweise aus 80 % Sauerstoff und 20 % Kohlendioxid. Hierdurch wird eine sehr geringe Aufrötung an der Fleischoberfläche erreicht. Die Aufrötung reicht jedoch nicht bis in den Kem der Fleischstücke.

Wenngleich auch mittels dem letztgenannten Verfahren eine kleine Verbesserung der Farbstabilisierung erreicht wird, so erscheint das erzielte Ergebnis noch nicht zufriedenstellend. Insbesondere ist bei den bekannten Verfahren nachteilig, daß die Farbstabilisierung nur im Bereich der Oberfläche des Frischfleisches stattfindet. Außerdem dauert der Aufrötungsprozeß viele Stunden.

Zwar ist aus der US-A-6026648 ein Verfahren zum Kühlen von Lebensmitteln bekannt, bei welchem sich in einem Mischer befindliches Fleisch durch Zuführung einer kryogenen Flüssigkeit gekühlt wird. Als kryogene Flüssigkeit soll vorzugsweise flüssiger Stickstoff verwendet werden. Grundsätzlich kommen aber beliebige kryogene Flüssigkeiten in Frage, von flüssigem Stickstoff bis hin zum flüssigen Argon oder sogar flüssigem Sauerstoff. Ob die verwendbaren kryogenen Flüssigkeiten einen Einfluß auf die Fleischfarbe haben, läßt sich der Druckschrift nicht entnehmen.

Es ist Aufgabe der Erfindung, ein eingangs genanntes Verfahren derart auszubilden, daß eine verbesserte Farbstabilisierung von Hackfleisch und kleinen Frischfleischstückchen erreicht wird.

Die Lösung dieser Aufgabe ergibt sich aus den Merkmalen des kennzeichnenden Teils des Anspruchs 1. Vorteilhafte Weiterbildungen der Erfindung ergeben sich aus den Unteransprüchen.

Gemäß der Erfindung ist ein Verfahren zur Farbstabilisierung von Hackfleisch und kleinen Frischfleischstückchen, bei welchem Fleischabschnitte geringer Größe in einem Mischer durch Zuführung eines Kältemittels gekühlt werden, dadurch gekennzeichnet, daß als Kältemittel flüssiger Sauerstoff (LO₂) verwendet wird.

Dadurch, daß als Kältemittel flüssiger Sauerstoff verwendet wird, erhält das Fleisch wieder seine helle Frischfleischfarbe die es für lange Zeit behält. Das Fleisch erhält eine schlachtrote Farbe bis in den Fleischkem hinein. Es hat sich sogar gezeigt, daß selbst leichte Verfärbungen wieder rückgängig gemacht werden können und verfärbte Stellen sogar wieder eine hellrote Frischfleischfarbe erhalten.

Besonders vorteilhaft ist es, daß der flüssige Sauerstoff nicht unter größerem Druck zugeführt werden muß. Die Behandlung des Frischfleisches mit Sauerstoff kann bei einem Druck von einem bar geschehen.

Sehr gute Ergebnisse werden erreicht, wenn pro Kilogramm Frischfleisch etwa 0,1 bis 0,2 Liter flüssiger Sauerstoff zugegeben werden, wie dies bei einer besonderen Ausführungsform der Erfindung vorgesehen ist. Durch die Zugabe von durchschnittlich 0,15 Liter flüssigem Sauerstoff pro Kilogramm Hackfleisch wird ein sehr guter Wirkungsgrad erzielt.

Als besonders vorteilhaft hat sich ebenfalls herausgestellt, während einer Zeit von etwa sechs bis zehn, maximal fünfzehn Minuten Sauerstoff zuzuführen. Besonders vorteilhaft ist es jedoch, daß die Mischzeit bei dem erfindungsgemäßen Verfahren maximal nur noch fünfzehn Minuten beträgt.

Ebenfalls als sehr zweckmäßig hat sich herausgestellt, das nach dem erfindungsgemäßen Verfahren behandelte Frischfleisch nach dem Mischen in eine sogenannte Aromaschutzverpackung mit sehr hohem O₂-Gasanteil (nahezu 100 %) zu packen. Hierdurch wird die helle Frischfleischfarbe lange Zeit erhalten, was sich insbesondere im Hinblick auf längere Vertriebswege als sehr vorteilhaft herausgestellt hat.

Weitere Einzelheiten, Merkmale und Vorteile der vorliegenden Erfindung ergeben sich aus der nachfolgenden Beschreibung eines besonderen Ausführungsbeispiels.

Bei der Anwendung des erfindungsgemäßen Verfahrens werden kleine Fleischabschnitte (Reste) aus der Zerlegung von Nutztierkörpem wie beispielsweise von Schweinen oder Rindern und Geflügel zur sogenannten Standardisierung einem Mischer zugeführt. Bei der Standardisierung werden die Fleischabschnitte zerkleinert und mageres Fleisch mit fettem Fleisch gut durchmischt. Während des Mischens wird in den Mischbehälter flüssiger Sauerstoff bei niedrigem Druck eingeleitet. Es hat sich gezeigt, daß ein Druck von einem bar genügt. Bei einer größeren Fleischmenge ist es jedoch vorteilhaft, den Druck etwas zu erhöhen.

Hierdurch wird die Fleischtemperatur, welche bei den eingebrachten Fleischabschnitten zwischen plus 5 und plus 15 Grad Celsius liegt auf eine Ausgangstemperatur von etwa plus 4 bis minus 3 Grad Celsius abgekühlt. Die Behandlung mit flüssigem Sauerstoff beträgt etwa sechs bis zehn, maximal fünfzehn Minuten. Hierdurch erhält das Frischfleisch eine helle, schlachtrote Fleischfarbe bis in den Fleischkem hinein.

Nach der Behandlung mit flüssigem Sauerstoff wird das Frischfleisch in einen durchsichtigen Folien-Schlauchbeutel gegeben, der nur wenige Sekunden mit einem Schutzgas vorgespült wird. Dadurch wird die normale Luftatmosphäre verdrängt und von einem Gasgemisch ersetzt, das beispielsweise aus 80 % Sauerstoff und 20 % Kohlendioxid bestehen kann. Zur LangzeitLangzeit-Farberhaltung genügt jedoch auch eine nahezu 100% O₂-Atmosphäre.

Befindet sich das Produkt im Schlauchbeutel und ist komplett vom Schutzgas umhüllt, werden die Enden des Beutels mit Hitze luftundurchlässig verschweißt.

## Patentansprüche

1. Verfahren zur Farbstabilisierung von Hackfleisch und kleinen Frischfleischstückchen, bei welchem Fleischabschnitte geringer Größe in einem Mischer durch Zuführung eines Kältemittels gekühlt werden,
**dadurch gekennzeichnet,**
**daß** als Kältemittel flüssiger Sauerstoff (LO₂) verwendet wird.

2. Verfahren nach Anspruch 1,
**dadurch gekennzeichnet,**
**daß** pro Kilogramm Frischfleisch etwa 0,1 bis 0,2 Liter flüssiger Sauerstoff zugegeben werden.

3. Verfahren nach Anspruch 1 oder 2,
**dadurch gekennzeichnet,**
**daß** sich die Zugabe von Sauerstoff über etwa sechs bis zehn Minuten erstreckt.

4. Verfahren nach einem der Ansprüche 1 bis 3,
**dadurch gekennzeichnet,**
**daß** die Mischzeit maximal 15 Minuten beträgt.

5. Verfahren nach einem der Ansprüche 1 bis 4,
**dadurch gekennzeichnet,**
**daß** das Frischfleisch nach dem Mischen in eine sogenannte Aromaschutzverpakkung gepackt wird.

## Claims

1. Method for stabilizing the colour of minced meat and small pieces of fresh meat, in which small meat segments are cooled in a mixer by supplying a refrigerant, **characterized in that** the refrigerant used is liquid oxygen (LO₂) .

2. Method according to Claim 1, **characterized in that** about 0.1 to 0.2 litre of liquid oxygen are added per kilogram of fresh meat.

3. Method according to Claim 1 or 2, **characterized in that** the addition of oxygen continues over about six to ten minutes.

4. Method according to any of Claims 1 to 3, **characterized in that** the mixing time is not more than 15 minutes.

5. Method according to any of Claims 1 to 4, **characterized in that**, after the mixing, the fresh meat is packed in so-called aroma-tight packaging.

## Revendications

1. Procédé de stabilisation de la couleur de viande hachée et de petits morceaux de viande fraîche, dans lequel des tronçons de viande de faible taille sont refroidis dans un mélangeur par apport d'un agent frigorigène ou agent réfrigérant, **caractérisé en ce que** l'on utilise en tant qu'agent frigorigène ou agent réfrigérant de l'oxygène liquide (LO₂).

2. Procédé selon la revendication 1, **caractérisé en ce que** l'on ajoute environ 0,1 à 0,2 litre d'oxygène liquide par kilogramme de viande fraîche.

3. Procédé selon la revendication 1 ou 2, **caractérisé en ce que** l'addition d'oxygène s'étend sur environ six à dix minutes.

4. Procédé selon l'une des revendications 1 à 3, **caractérisé en ce que** la durée de mélange est au maximum de 15 minutes.

5. Procédé selon l'une des revendications 1 à 4, **caractérisé en ce que** la viande fraîche est conditionnée après le mélange dans un emballage dit de préservation des arômes.
